# EUROPEAN PATENT SPECIFICATION

(11) **EP 3 659 228 B1**
(45) Date of publication and mention of the grant of the patent: **07.06.2023**
(21) Application number: 18750509.4
(22) Date of filing: 17.07.2018
(51) Int. Cl.: H02G 3/14

(54) **COVER PLATE AND GROUP OF PARTS FOR WALL-MOUNTING MODULAR ELECTRIC APPARATUSES**
ABDECKPLATTE UND GRUPPE VON TEILEN ZUR WANDMONTAGE MODULARER ELEKTRISCHER VORRICHTUNGEN
PLAQUE DE RECOUVREMENT ET GROUPE DE PIÈCES POUR APPAREILS ÉLECTRIQUES MODULAIRES À MONTAGE MURAL

(30) Priority: 24.07.2017 IT 201700083986
(43) Date of publication of application: 03.06.2020
(73) Proprietor: BTICINO S.P.A., 21100 Varese (VA) (IT)
(72) Inventor: BROGIOLI, Marco, 21100 Varese (IT); ROCERETO, Pietro, 21100 Varese (IT)
(74) Representative: Carangelo, Pierluigi
(86) International application number: PCT/IB2018/055275
(87) International publication number: WO 2019/021110

(56) References cited:
- US-A- 4 359 619
- US-A- 5 457 286
- US-A1- 2017 025 835
- US-B1- 9 608 418

## Description

The present invention relates to the technical field of devices for wall-mounting modular electric apparatuses and more particularly, it relates to a cover plate and a group of parts, including such a plate, for wall-mounting modular electric apparatuses.

For the purposes of the present description, modular electric apparatus generally means any electric means or device generally belonging to electric installations in civilian buildings and the like and usually intended to be mounted on, e.g. embedded in, walls of such buildings, side-by-side of other modular electric apparatuses.

Therefore, this definition includes, but is not limited to, switches, power sockets, data network sockets, TV sockets, telephone sockets, pushbuttons, switches, multiway switches, control electrical devices in general, connectors, thermostats, timers, fuse holders, ringers/buzzers, emergency lights, e.g. removable, signaling lights, e.g. step markers, displays, e.g. LCDs, and the like.

As is known, the above-mentioned modular electric apparatuses usually are installed on a wall, thus forming composite mounting structures, or groups of parts, generally including:
- a plurality of modular electric apparatuses;
- a box intended to be embedded in the wall;
- a supporting frame that can be fixed to the box directly or by means of adaptors called "mudrings" and adapted to support the plurality of modular electric apparatuses arranged mutually side-by-side; and
- a cover plate which can be fixed to the supporting frame and provided with a through opening to allow a user to visually or manually access the modular electric apparatuses installed on the supporting frame.

The aforesaid groups of parts are often indicated with the expression lighting points.

The role of the cover plate in the lighting points indicated above is both the one of ensuring a minimum protection for the electric apparatuses (for example from dust) and the one of preventing dangerous access (for example, through sharp objects) to the electrically conductive parts of the electric apparatuses. A further role of the cover plate is also the one of acting as shield to prevent an outwards outlet of electric arcs, flames, incandescent wires, in order to avoid the triggering of fires.

Another important task of the cover plate is the one of masking unsightly appearances generated for example, by the presence of a cavity in the wall and by the presence of the box and the mounting frame, which more than being significant in terms of appearance, have a functional value which is difficult to reconcile with appearance-related requirements or standards.

A front portion of the modular electric apparatuses in the lighting points indicated above projects from the supporting frame and at least partly crosses the through opening of the cover plate. Such a portion is for example, a key for actuating a modular switch, such as for example, an actuating pushbutton. This structural solution causes various drawbacks which are both appearance-related and functional-related. From an appearance-related viewpoint, there are indeed problems due to possible misalignments visible between the modular electric apparatuses and the cover plate due for example, to imperfections of the installation wall. From a functional viewpoint instead, the aforesaid structural solution makes the cleaning operations of the lighting point complicated, promotes the accumulation of dust, grease and germs, makes customizing lighting points difficult and in the case of pushbutton switches, has a given margin of exposure to electric risk for the users, for example if they actuate the modular switches with wet hands or try to insert thread-like metal objects into the lighting point.

US 4359619 A discloses a cover for a box of electric contacts such as switches, push button, sockets and the like.

The present invention proposes to provide a solution which is both capable of overcoming or at least partly reducing the drawbacks of the cover plates and the lighting points of the above-described known art.

Such an object is achieved by means of a cover plate as defined in accompanying claim 1 in the most general embodiment thereof, and in the dependent claims in certain particular embodiments thereof.

It is a further object of the present invention to provide a group of parts for wall-mounting modular electric apparatuses, as defined in accompanying claim 21.

The invention will be better understood from the following detailed description of a preferred embodiment thereof, given by way of example and therefore non-limiting in relation to the accompanying drawings, in which:
- figure 1 shows an axonometric view with separate parts, of an embodiment of a group of parts comprising a cover plate for wall-mounting modular electric apparatuses, in which the cover plate includes a plurality of first and second cover elements, in which one of the first cover elements in figure 1 is shown overturned with respect to the remaining ones;
- figure 2 shows an axonometric view of the cover plate of the group of parts in figure 1;
- figure 3 shows a plan front elevation view of the cover plate of the group of parts in figure 1;
- figure 4 shows an axonometric view of a possible variant of the cover plate in figure 2;
- figure 5 shows an axonometric view of a further variant of the cover plate in figure 2;
- figure 6 shows a plan front elevation view of the cover plate in figure 2, from which two cover elements have been removed to make the base body of the cover plate partly visible;
- figure 7 shows a plan bottom view of the cover plate in figure 2, in the configuration in figure 6;
- figure 8A shows a plan bottom view of the base body of the cover plate in figure 1, comprising two mounting cross members and two connection uprights;
- figure 8B shows a plan front elevation view of the base body of the cover plate in figure 1;
- figure 9 shows an axonometric view of a first embodiment of one of the second cover elements that can be coupled to a connection upright in figure 8;
- figure 10 shows a first axonometric view of a second embodiment of one of the second cover elements that can be coupled to a connection upright in figure 8;
- figure 11 shows a second axonometric view of the cover element in figure 10;
- figure 12 shows an axonometric view of one of the first cover elements that can be coupled to the mounting cross members;
- figure 13 shows an axonometric view of the first cover element in figure 12, from which certain parts have been removed;
- figure 14 shows an axonometric view of one of the parts removed in figure 13 with respect to figure 12;
- figure 15 shows an axonometric view of another embodiment of one of the first cover elements;
- figure 16 shows an axonometric view of the first cover element in figure 15, with certain parts detached;
- figure 17 shows a plan rear elevation view of the cover plate in figure 6;
- figure 18 shows a plan section view of the group of parts in figure 1 along the plane transverse to the mounting cross members, in which the group of parts is in a resting configuration;
- figure 19 shows the plan section view in figure 18, in which the group of parts is in a first actuating configuration;
- figure 20 shows the plan section view in figure 18, in which the group of parts is in a second actuating configuration;
- figure 21 shows a perspective view of a further variant of the cover plate in figure 2.

Equal or similar elements in the drawings are indicated with the same numbers.

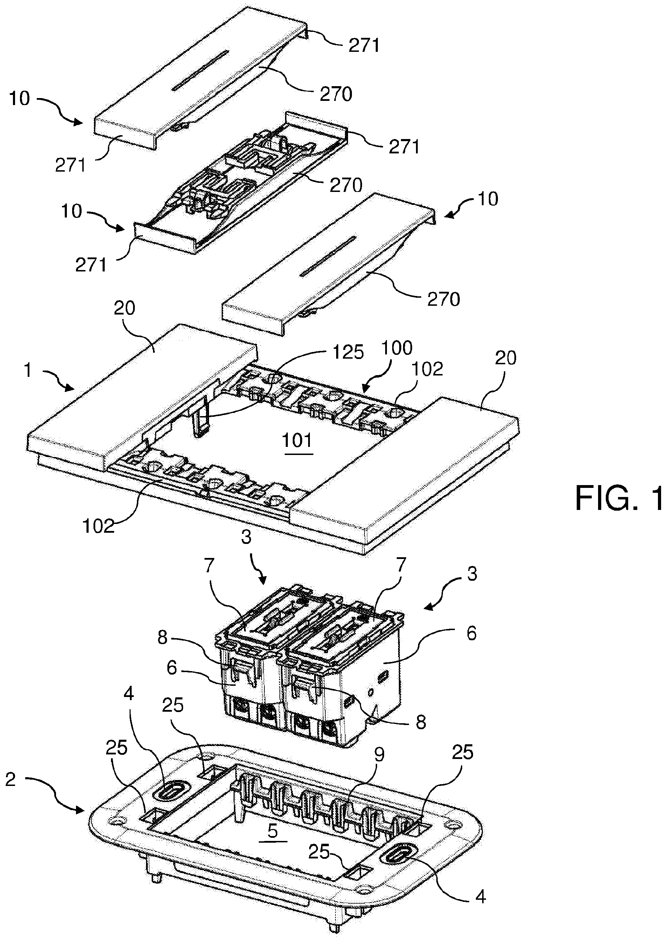

Figure 1 shows a group of parts for wall-mounting modular electric apparatuses 3, such as for example modular switches 3 of a civilian electrical installation (e.g. a household electrical system). The aforesaid group of parts may also be indicated in the present description with the expression lighting point.

The lighting point comprises a supporting frame 2 intended to be fixed - in the example by means of a pair of screws that can be inserted into respective through holes 4 - to an electrical box which can be embedded in the wall, not shown in the figures.

Preferably, the supporting frame 2 has a frame-shaped base body comprising four parallel and opposed two-by-two frame sides, which preferably are made of electrically insulating material, for example of hard plastic. Two of the aforesaid opposed frame sides are provided with interlocking and snap fixing elements 9 to allow the fixing of the modular electric apparatuses 3 provided with conjugated interlocking and snap fixing elements 8.

The supporting frame 2 comprises a mounting window 5 in which one or more modular electric apparatuses 3 may be fixed. Preferably, the modular electric apparatuses 3 can be fixed to the supporting frame 2 by means of the aforesaid conjugated interlocking and snap fixing elements 8. In the example in figure 1, however without any limitation, the modular electric apparatuses 3 are three electrical pushbutton switches. Each of them comprises a casing 6 and a pushbutton 7, for example constrained to casing 6 so as to axially slide with respect to casing 6. Casing 6 encloses therein the electro-mechanical electric switching members. Casing 6 preferably comprises the aforesaid conjugated interlocking and snap fixing elements 8 which are suitable for engaging with the fastening elements 9 of the supporting frame 2. Preferably, the aforesaid conjugated interlocking and snap fixing elements 8 are provided on two opposed outer faces of casing 6, only one of which is shown in figure 1. A non-limiting example of the snap and lock fixing system between modular electric apparatuses and a supporting frame is described in patent publication WO2006123379 A1.

It is worth noting that there is no limitation concerning the number and type of modular electric apparatuses 3 that can be fixed to a supporting frame 2, with the exception of possible limitations required by the modularity. Only by way of example and without any limitation, alternatively to the three electrical pushbutton switches, there may be fixed to the supporting frame 2 (which in the non-limiting example has three modules):
- two one-module switches and one one-module electrical socket; or
- two one-module electrical sockets and one one-module switch; or
- one two-module electrical socket (e.g. a Schuko socket) and one one-module switch or electrical socket.

As explained above, in general, the definition of modular electrical apparatus includes, but is not limited to, switches, power sockets, data network sockets, USB sockets, TV sockets, telephone sockets, pushbuttons, switches, multiway switches, control electrical devices in general, connectors, thermostats, timers, fuse holders, ringers/buzzers, emergency lights, e.g. removable, signaling lights, e.g. step markers, displays, e.g. LCDs, and the like.

The supporting frame 2 comprises a plurality of fixing seats or channels 25, which preferably are defined in the frame-shaped base body to allow a cover plate 1 to be fixed to the supporting frame 2. Preferably, there are four fixing seats or channels 25.

The group of parts further comprises a cover plate 1 adapted and configured to be fixed to the supporting frame 2.

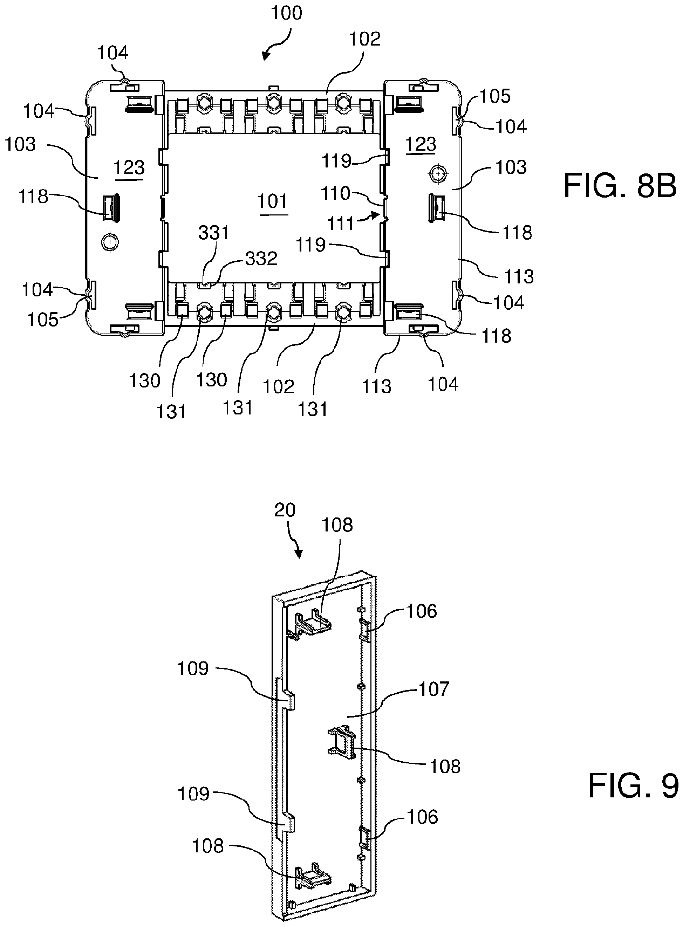

The cover plate 1 comprises a frame-shaped base body 100 (best shown in figure 8B) which extends about a through opening 101.

The cover plate 1 preferably comprises a plurality of fixing teeth 125 (four fixing teeth in the example) which project from the base body 100 towards the supporting frame 2, each of which is suitable for engaging in a respective fixing seat or channel 25. A non-limiting example of the fixing system between a cover plate and a supporting frame is described in European Patent EP1867026 E1.

The base body 100 comprises two mounting cross members 102 arranged on opposite sides with respect to the through opening 101, two connection uprights 103 arranged on opposite sides with respect to the through opening 101 and adapted to connect - or which connect - the two mounting cross members 102 to each other. The base body 100 is for example, made of plastic material, for example by molding. Preferably, the base body 100 consists of a single piece.

There may also be more than two connection uprights 103 of the base body 100, for example by providing one or more intermediate connection uprights (e.g. a central connection upright) between the two connection uprights 103 depicted in figure 8B.

The cover plate 1 further comprises a plurality of first cover elements 10, 11, 12 arranged side-by-side one another between the connection uprights 103 to wholly or partly cover the through opening 101. Preferably, each of the first cover elements 10, 11, 12 is associable with a respective modular electric apparatus 3. For example, with reference to figure 1, each of the three first cover elements 10 is associable with a respective modular electric apparatus 3 even though only two modular electric apparatuses 3 are shown in figure 1. For the purposes of the present description, "associable" means that it may be put into a functional relationship (for example to create a mechanical and/or electrical functional interaction) or in a positional relationship (for example in an alignment relationship) with a respective modular electric apparatus 3.

The cover plate 1 comprises coupling elements 230 adapted to mechanically couple the first cover elements 10, 11, 12, in preference directly, to the mounting cross members 102 of the base body 100.

The first cover elements 10, 11, 12 in the cover plate 1 overlap the mounting cross members 102 to also cover the mounting cross members 102 of the frame-shaped base body 100, in addition to the through opening 101. Preferably, the first cover elements 10, 11, 12 frontally wholly cover the mounting cross members 102.

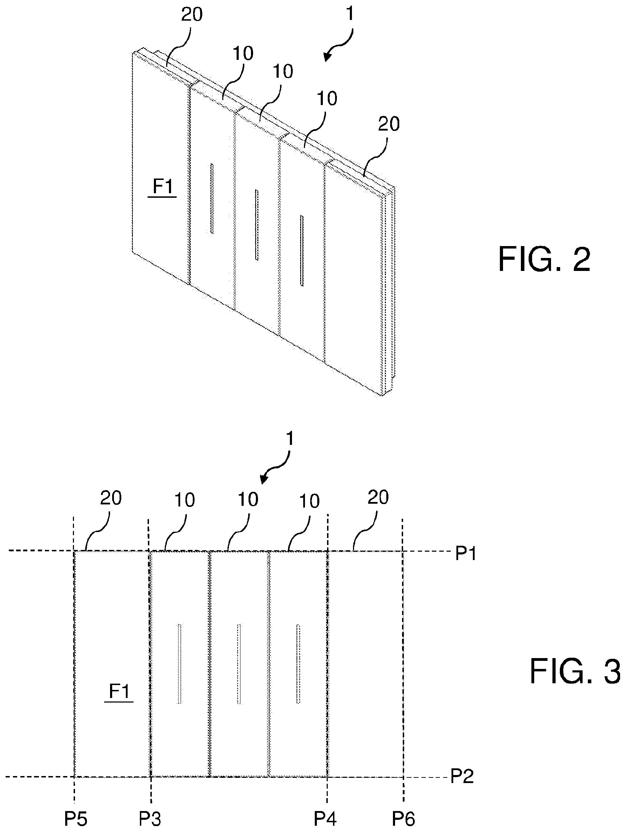

Preferably, the plurality of the first cover elements 10, 11, 12 defines an array of cover elements having a flat front face, such as for example, the flat front face shown in figure 3. More preferably, the aforesaid array of cover elements has at least one pair of flat opposite side faces, such as for example, the opposite faces arranged along the planes P1 and P2 in figure 3 which are perpendicular to the front face. For example, the aforesaid array of cover elements has two pairs of flat opposite side faces. One of such pairs in figure 3 is formed by the opposite faces arranged along the planes P1 and P2 which are perpendicular to the front face, and the other pair is formed by the opposite faces arranged along the planes P3 and P4 which are perpendicular to the front face.

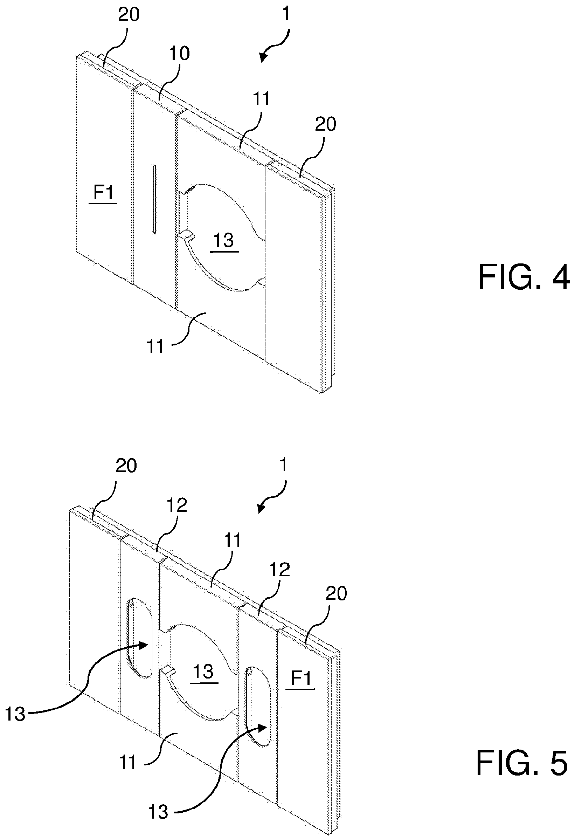

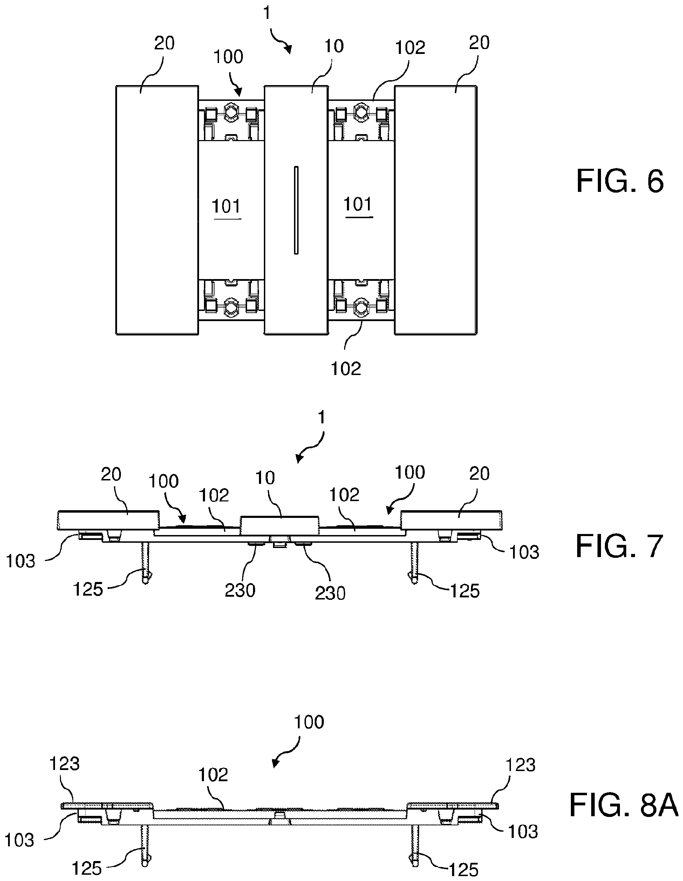

With reference to figure 6, according to one advantageous embodiment, the cover plate 1 comprises at least a first cover element 10 which extends between the mounting cross members 102 transversely to the mounting cross members 102, thus overlapping the through opening 101. If such a cover element 10 does not have a through window, it may for example, be a simple cap (or false pole) or may be a switch for actuating a switch. Figure 5 shows an alternative embodiment of first cover elements 12 which comprise a through window 13 defined in the thickness of the cover element 12 in order to obtain the cover of a modular electric apparatus which is a socket (e.g. an electricity grid socket).

With reference to figures 4 and 5, first cover elements 11 may also be provided splitted into two separate parts, each of which can be coupled to a respective mounting cross member 102, thus defining a through window 13 between the two parts in order to obtain the cover of a modular electric apparatus which is a socket (e.g. a Schuko electrical socket). It is therefore apparent that for the purposes of the present description, when the term "element" is used in the expression "cover element", it also contemplates the embodiment of an element which is a "cover assembly", i.e. a functional entity which includes several cover pieces that are physically separate from one other.

Without dwelling further on the possible types of the first cover elements 10, 11, 12 of the cover plate 1, it is worth noting that such types may comprise continues plates as in figures 2 and 3 to obtain plugs or switches for actuating modular electric apparatuses, or they may be holed or split plates (like in figure 5) to obtain covers of sockets, various combinations being clearly possible like the one depicted in figure 4, in which the first cover element 10 is for example, an actuating key and the first cover element 11 is divided into two parts for covering of a Schuko socket.

According to one advantageous and non-limiting embodiment, the cover plate 1 further comprises a plurality of second cover elements 20 comprising a cover element 20 fixed to one of the connection uprights 103 and a further second cover element 20 fixed to the other of the connection uprights 103, each of the second cover elements 20 being such as to cover a respective connection upright 103.

According to an advantageous embodiment, the first cover elements 10, 11, 12 are interposed between the second cover elements 20. Preferably, the plurality of the first cover elements 10, 11, 12 defines, together with the plurality of the second cover elements 20, an array of cover elements having a flat front face F1, such as for example, the main face F1 shown in figure 3. Said flat front face F1 is one of the two main faces of the cover plate 1. More preferably, the aforesaid array of cover elements has at least one pair of flat opposite side faces, such as for example, the opposite faces arranged along the planes P1 and P2 in figure 3 which are perpendicular to the front face. For example, the aforesaid array has two pairs of flat opposite side faces. One of such pairs in figure 3 is formed by the opposite faces arranged along the planes P1 and P2 which are perpendicular to the front face, and the other pair is formed by the opposite faces arranged along the planes P5 and P6 which are perpendicular to the front face.

According to one advantageous embodiment, the second cover elements 20 are fixed to the respective connection uprights 103 by means of fixing elements, which in one advantageous and non-limiting embodiment, are interlocking and snap fixing elements. With reference to figures 8 to 11, according to one advantageous embodiment, the interlocking and snap fixing elements comprise elastically deformable elements 104 arranged on one or more preferably outer peripheral edges 113 of the connection uprights 103. These elastically deformable elements 104 are preferably made in a single piece with the connection uprights 103, for example by means of injection molding. According to one advantageous embodiment, the elastically deformable elements 104 are arranged close to (e.g. beside) a respective through opening 105 defined in the thickness of the connection uprights 103. Preferably, the elastically deformable elements 104 are wave-shaped bars or bridges and have a rounded central portion and two straight opposite end portions.

According to one embodiment, the connection uprights 103 each comprise a fixing plate 123 to which a respective second cover element 20 is fixed. For example, such fixing plates 123 are integrated in the connection uprights 103.

According to one advantageous embodiment, the mounting cross members 102 are arranged in retracted position with respect to the fixing plates 123 or in general with respect to the connection uprights 103. The fact of providing for the mounting cross members 102 to be arranged in retracted position with respect to the connection uprights 103 has the advantage of ensuring the planarity of the front face F1 of the cover plate 1 because it allows space useful for interposing functional elements between the first cover elements 10, 11, 12 and the mounting cross members 102 (such as for example, coupling elements 230 and alignment means 211, 231) to be defined or recovered. Such functional elements are detailed below in the present description.

According to one advantageous embodiment, the elastically deformable elements 104 are arranged on the fixing plates 123. Preferably, the fixing plates 123 comprise a portion projecting laterally with respect to a remaining portion of the connection upright 103. More preferably, the elastically deformable elements 104 are arranged on such a projecting portion.

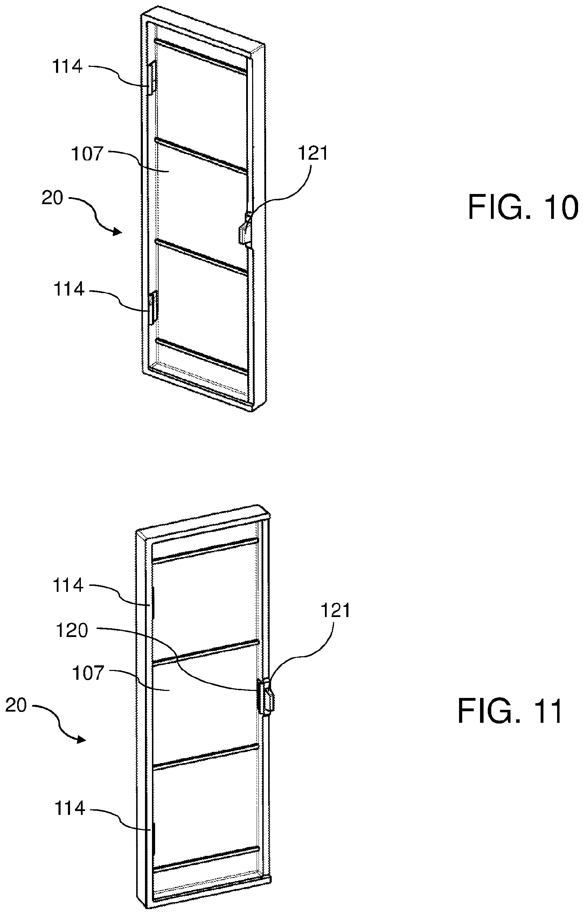

The elastically deformable elements 104 are adapted and configured to engage with seats 106 (shown in figure 9) or protrusions 114 (shown in figure 10) on a face 107 of the second cover elements 20 facing towards the associated connection upright 103. Said face 107 practically depicts the rear face of the second cover elements 20.

Figure 9 shows a first example of a second cover element 20 which may be conveniently obtained in plastic (e.g. ABS), which comprises one or more seats 106 (two in figure 9), in which respective elastically deformable elements 104 are engaged. In such an example, the second cover element 20 further comprises one or more coupling teeth 108 (three in figure 9) which project from the rear face 107 of the second cover element 20 to engage in respective coupling seats or openings 118 defined in the thickness of the connection upright 103, more specifically defined in the thickness of the fixing plates 123. It is therefore worth noting in the aforesaid embodiment in figures 8A, 8B and 9 that the connection upright 103 comprises a distributed system of coupling elements comprising at least one coupling element 104 arranged on a peripheral edge 113 and at least one coupling element (the coupling seats or openings 118 in the example) obtained in the thickness of the connection upright 103 and arranged spaced apart from the peripheral edge 113.

In the particular example in figure 9, the second cover element 20 also comprises one or more positioning and abutment wings 109 adapted to engage with respective recesses 119 provided on the connection upright 103 and in particular, on a peripheral edge opposed to the peripheral edge 113 on which the at least one elastically deformable element 104 is arranged.

Figures 10 and 11 show another possible embodiment of a second cover element 20, conveniently obtainable in metal or metallic alloy material (e.g. of aluminum or Zamak). Such a cover element 20 comprises at least one protrusion 114 (two protrusions 114 are shown in figure 10) suitable for engaging with a respective deformable coupling element 104 of the connection upright 103. To ensure an increased hold, the second cover element 20 comprises a further protrusion 120 adapted to engage with a tooth 110 of the connection upright 103 arranged on a peripheral edge opposed to the peripheral edge 113 on which the at least one elastically deformable element 104 is arranged. In the example in figures 10 and 11, the second cover element 20 also comprises a positioning wing 121 suitable for being inserted in a counter-shaped seat 111 provided in the aforesaid opposed peripheral edge.

What is described above with reference to the second cover elements 20 preferably is also applicable if such cover elements 20 are applied to intermediate connection uprights, if there is also provided at least one connection upright (not shown in the drawings) interposed between two connection uprights 103 arranged on opposite sides of the base body 100.

Certain advantageous embodiments of the first cover elements 10, 11, 12 will now be described in greater detail.

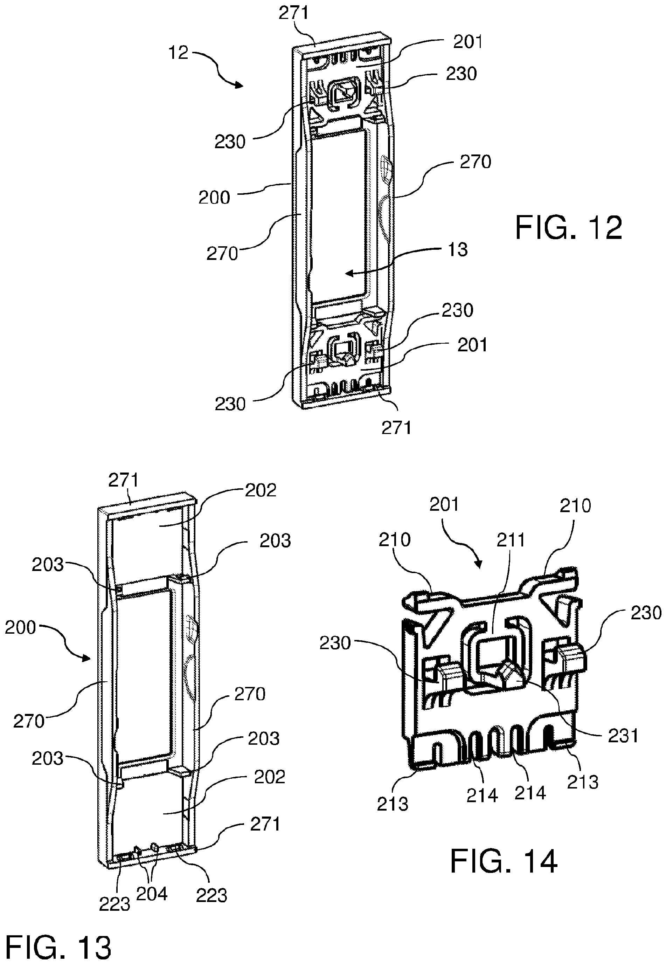

Referring now for simplicity - however without any limitation - to the first cover element 12 depicted in figure 12, which depicts a cover element of a modular apparatus which is an electricity socket, the first cover element 12 comprises a plate-shaped body 200 and coupling elements 230 fixed to the plate-shaped body 200 adapted and configured to mechanically couple the cover element 12, preferably directly, to the cover plate 1, and in particular, to the base body 100, and more specifically, to the mounting cross members 102. According to one embodiment, the coupling elements 230 allow the plate-shaped body 200 of the first cover element 12 to be constrained to the cover plate 1 so that the plate-shaped body 200 may move with respect to the mounting cross members 102 between two opposite stroke end positions, in one of which the plate-shaped body 200 is relatively closer to the mounting cross members 102 and in the other of which the plate-shaped body 200 is relatively further away from the mounting cross members 102. For example, the aforesaid coupling elements 230 comprise snap coupling teeth (four in figure 12), which once inserted in respective engagement seats 130 defined in a mounting cross member 102, allow the first cover element 12 to translate for a given stroke with respect to the cover plate 1, in particular with respect to the base body 100, and more specifically, with respect to the mounting cross member 102. In order to avoid an accidental detachment of the first cover element 12 from the mounting cross members 102, once inserted in respective engagement seats 130, such snap coupling teeth cannot be removed unless this is done forcedly or intentionally.

The first cover element 12 comprises two side walls 270 which project from the plate-shaped body 200 towards the base body 100. Preferably, the plate-shaped body 200 comprises two relatively shorter sides and two relatively longer sides and the side walls 270 are arranged along the relatively longer sides. Preferably, the side walls 270 are arranged on opposite sides from each other with respect to the plate-shaped body 200. More preferably, the side walls 270 are parallel to each other.

According to one embodiment, the first cover element 12 advantageously comprises two further side walls 271 which project from the plate-shaped body 200 towards the base body 100, outside the latter. Preferably, the further side walls 271 are arranged along the relatively shorter sides of the main body 200. Conveniently, the further side walls 271 have a lower height with respect to the side walls 270.

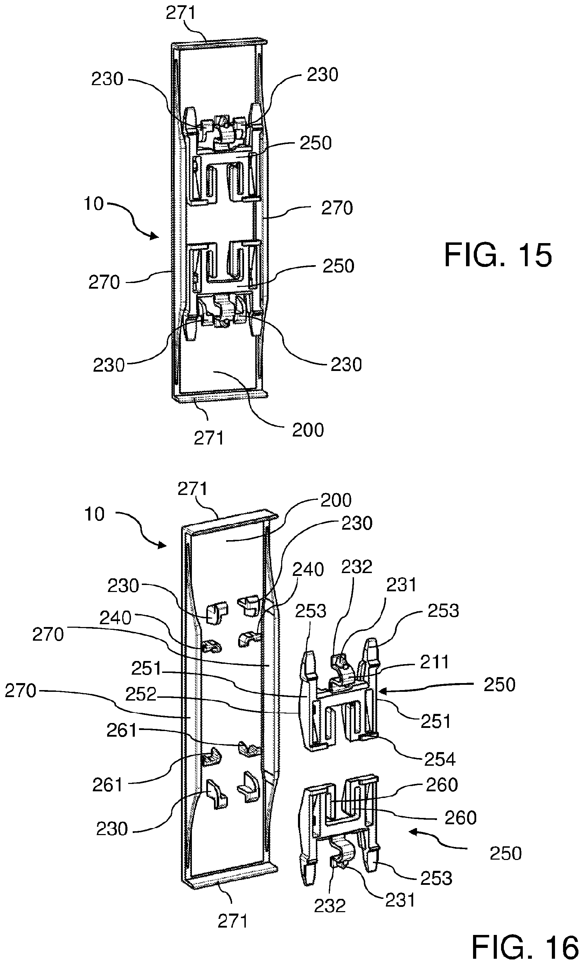

The side walls 270 are at least partly received inside the through opening 101 of the base body 100. Conveniently, the side walls 270 are cap-shaped or trapezoid-shaped. In other words, a central portion of such side walls 207 has a greater height with respect to two side portions arranged on opposite sides with respect to the central portion. Preferably, the central portion of the side walls 207 has a constant height, while the side portions have an at least partly variable, preferably gradually variable, height, for example variable in a linear manner or with a concave variation profile. An example of side walls 270 with trapezoid profile is clearly shown in figures 12 and 13, in which such side walls 270 have a central portion having a constant height and two side portions having a linearly variable height up to reaching a plateau in which the height ceases to decrease. An example of side walls 270 with cap profile is instead shown in figures 15 and 16, in which such side walls 270 which project from the plate-shaped body 200 of the first cover element 10 have a middle portion having constant height and two side portions having variable height with a concave variation profile.

The side walls 270 advantageously allow the first cover elements 10, 12 to be strengthened and the planarity of the plate-shaped body 200 to be promoted. Indeed, a Moldflow^{™} analysis has shown that such side walls 270 promote the reduction of the deformations in cooling step of the piece during the molding cycle if the cover element 10, 12 is made by molding of plastic material (e.g. ABS).

Advantageously, the first cover element 12 comprises alignment means 211, 231 adapted to be operatively interposed between the first cover element 12 and the cover plate 1, and in particular, the base body 100, and more specifically, a mounting cross member 102, to keep the plate-shaped body 200 in the stroke end position in which it is relatively further away from the cover plate 1 and in particular, from the base body 100, and more specifically, from the mounting cross member 102, in the absence of external forces. Preferably, such alignment means 211, 231 comprise at least one elastic element 211 operatively interposed between the plate-shaped body 200 and the base body 100, and in particular, the mounting cross member 102.

Preferably, the alignment means 211, 231 allow an alignment along three perpendicular axes to be obtained between the plate-shaped body 200 and the base body 100 (and in particular, the mounting cross member 102). For example, in order to obtain a triaxial alignment, the alignment means 211, 231 comprise an elastic element 211 adapted to exert a thrust force along an axis and comprise a centering tooth 231 on which the aforesaid elastic element 211 acts and which is wedge-shaped on a plane transverse (e.g. perpendicular) to said axis. The centering tooth 231 in the example engages in a recess 131 with at least partly counter-shaped section provided on the mounting cross member 102. The elastic element 211 preferably performs an elastic suspension function for the plate-shaped body 200 of the cover element 12. Preferably, the centering tooth 231 is fixed to the elastic element 211 and more preferably, it forms a single piece with the latter.

According to one advantageous embodiment, the first cover device 12 comprises a support device 201 of the aforesaid alignment means which can be or is reversibly or irreversibly coupled to the plate-shaped body 200 (e.g. by means of an interlocking and snap coupling).

With reference to figures 12 to 14, according to one advantageous embodiment, both the aforesaid coupling elements 230 and the aforesaid alignment means 211, 231 belong to the support device 201 that can be reversibly or irreversibly coupled to the plate-shaped body 200 by means of an interlocking and snap coupling. In the particular example depicted, both the coupling elements 230 and the alignment means 211, 231 are part of a support device 201 that can be fixed to the plate-shaped body 200, preferably in a respective seat 202 defined in the plate-shaped body 200. In the example, such fixing occurs by means of interlocking and snap fixing elements comprising mutually cooperating abutments 203 and elastic elements 210.

Preferably, the first cover element 12 comprises a centering system adapted to center the support device 201 with respect to the plate-shaped body 200, preferably along two or three axes which are perpendicular to one another. In the example in figures 12 to 14, the centering system is a distributed centering system which in addition to the abutments 203 and the elastic elements 210, also comprises two wings 204 that can be inserted in respective seats 214 and mutually cooperating projecting elements 213, 223. The aforesaid centering system allows to contrast a rotation of the support device 201 with respect to the plate-shaped body 200 along an axis perpendicular to the plate-shaped body 200, as well as a translation of the support device 201 with respect to the plate-shaped body 200 along said axis and therefore allows the support device 201 to be centered along three perpendicular axes with respect to the plate-shaped body 200.

As is noted in figures 12 to 14, the first cover element 12 comprises two of the aforesaid opposed support devices 201, each intended to couple the plate-shaped body 200 to a respective mounting cross member 102.

Also each of the separate first cover elements 11 in figures 4 and 5 may include at least one support device 201 of the type described above. For example, since the first cover element 11 has double modularity, each of the two separate parts 11 thereof may comprise two support devices 201, which are placed side-by-side in order to couple to a same mounting cross member 102.

With reference to figures 15 to 20, a further embodiment is now described of a first cover element 10 which here absolves the function of a key for manually actuating a modular electric apparatus 3 (such as e.g. a pushbutton modular switch).

The first cover element 10 comprises a plate-shaped body 200 and coupling elements 230 fixed to the plate-shaped body 200 adapted and configured to mechanically couple, in preference directly, the first cover element 12 to the cover plate 1, in particular, to the base body 100, and more specifically, to the mounting cross members 102. According to one embodiment, such coupling elements 230 allow the plate-shaped body 200 of the first cover element 10 to be constrained to the cover plate 1, particularly to the base body 100, and more specifically, to the mounting cross members 102, so that the plate-shaped body 200 may move with respect to the mounting cross members 102 preferably between two opposite stroke end positions, in one of which the plate-shaped body 200 is relatively closer to the mounting cross members 102 and in the other of which the plate-shaped body 200 is relatively further away from the mounting cross members 102. For example, the aforesaid coupling elements 230 comprise snap coupling teeth which once inserted into the through opening 101 and which once the inner edges of the mounting cross members 102 have been crossed thus exceeding a snap position, engage with such inner edges in respective engagement seats 330 defined in the mounting cross members 102, inside of which said snap coupling teeth may slide but from which they may not be removed in order to avoid an accidental detachment of the cover element 10 from the mounting cross members 102, unless this is done forcedly or intentionally.

Also the first cover element 10 advantageously comprises two side walls 270 which project from the plate-shaped body 200 towards the base body 100. Such side walls 270 have already been described above in the present description. Moreover, also the first cover element 10 comprises two further side walls 271, they also already described above.

The cover element 10 in the example in figures 15 to 20 comprises at least one pressure transmission member 250 operatively coupled to the plate-shaped body 200 to transmit a pressure force applied to the plate-shaped body 200, to the modular electric apparatus 3. The pressure transmission member 250 in the example is coupled to the plate-shaped body 200 by means of two pins 240 which project from the plate-shaped body 200 to engage in respective engagement seats of the pressure transmission member 250 (not shown in the drawings).

In a particularly advantageous embodiment, the aforesaid pressure transmission member 250 comprises at least one stroke multiplier lever 251. In the example in figures 15 and 16, the first cover element 10 comprises two pressure transmission members 250 and each pressure transmission member 250 comprises two parallel stroke multiplier levers 251 joined to each other by a connection bar so as to be integral with each other in movement. For example, the engagement seats of the pins 240 are defined in the stroke multiplier levers 251.

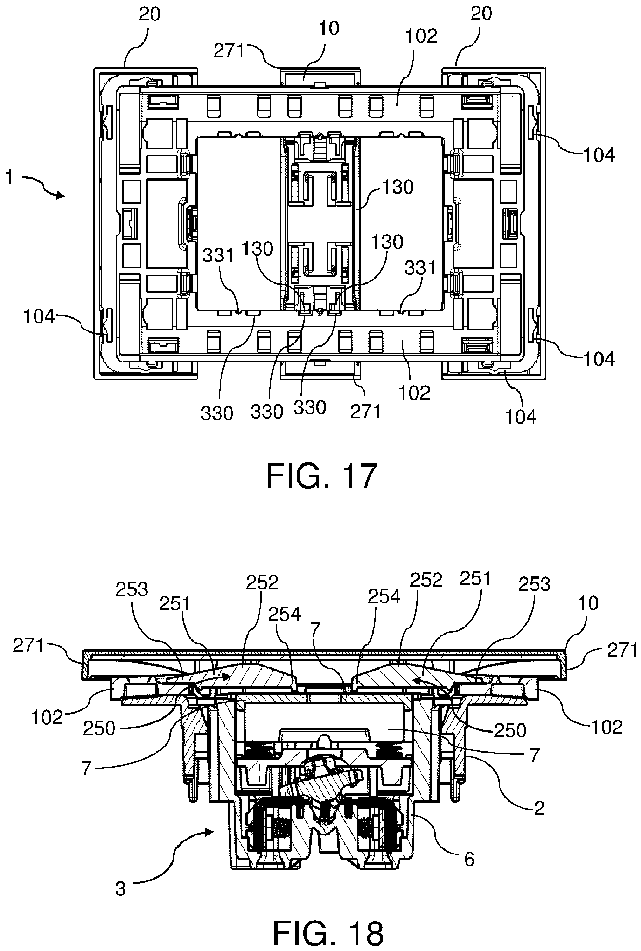

According to one advantageous embodiment, the stroke multiplier lever 251 comprises a fulcrum 252 reacting on the plate-shaped body 200 and two opposite end portions 253, 254, of which one end portion 253 reacting on one mounting cross member 102 and the other end portion 254 reacting on a movable portion of the modular electric apparatus 3 (for example on pushbutton 7), as shown in figures 18 to 20.

According to one possible embodiment, the first cover element 10 is coupled to the mounting cross members 102 so as to translate with respect to the base body 100. In a further embodiment, the first cover element 10 is coupled to the mounting cross members 102 so as to rotate with respect to the base body 100. However in one particularly advantageous embodiment, the first cover element 10 is coupled to the mounting cross members 102 so as to translate and rotate with respect to the base body 100. The coupling elements 230 and the pressure transmission member 250 in the example in figures 15 to 20 form a coupling system which allows the first cover element 10 to translate and rotate with respect to the base body 100.

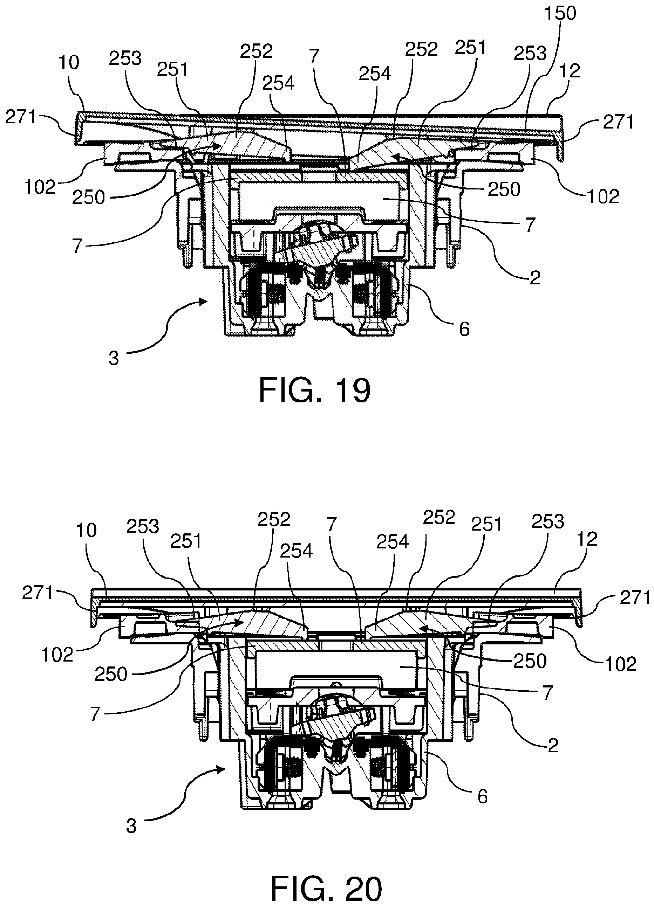

The first cover element 10 in figure 18 is depicted in the resting position in which there is an absence of external forces, in particular, an absence of manual pressure forces. The first cover element 10 in figure 19 is depicted in a first operating actuating condition which it takes on when a pressure force is applied to the cover element 10 on a part thereof which is off-balanced to the right in figure 19, or right-hand end portion 150. A rotation of the first cover element 10 with respect to the position in figure 18 is clearly shown. It is also worth noting that the two pressure transmission members 250 are independent of each other, indeed here only member 250 transmits the pressure onto pushbutton 7. It is also worth noting that the stroke of the right-hand end portion 150 of the first cover element 10 required to move pushbutton 7 along the useful stroke thereof may be contained due to the stroke multiplier lever 251. Indeed, although pushbutton 7 is decentered with respect to the right-hand end portion 150, a reduced movement of the right-hand end portion 150 with respect to a situation in which the stroke multiplier lever 251 is not provided, is required. Since the system in the example depicted is symmetrical, the same considerations apply if the pressure force is applied to an end portion of the first cover element 10 opposite to the right-hand end portion 150. The first cover element 10 in figure 20 is depicted in a second operating actuating condition that this takes on when a pressure force is applied to the cover element 10 on the middle part thereof. A translation with respect to the position in figure 18 is clearly shown.

According to one particularly advantageous embodiment, also the first cover element 10 in figures 15 to 17 comprises alignment means 211, 231 adapted to be operatively interposed between the first cover element 10 and the cover plate 1, and in particular, the base body 100, and more specifically, the mounting cross member 102, to keep the plate-shaped body 200 in the stroke end position in which it is relatively further away from the cover plate 1 and in particular, from the base body 100, and more specifically, from the mounting cross member 102, in the absence of external forces. Preferably, the alignment means 211, 231 comprise at least one elastic element 211 operatively interposed between the plate-shaped body 200 and the base body 100, and in particular, the mounting cross member 102. In the example, such an elastic element 211 is fixed to the pressure transmission member 250 and is preferably made in a single piece therewith.

Preferably, the alignment means 211, 231 allow an alignment along three perpendicular axes to be obtained between the plate-shaped body 200 and the base body 100 (and in particular, the mounting cross member 102). For example, in order to obtain a triaxial alignment, such alignment means 211, 231 comprise an elastic element 211 adapted to exert a thrust force along an axis and comprise a centering tooth 231 on which the aforesaid elastic element 211 acts and which is wedge-shaped on a plane transverse (e.g. perpendicular) to said axis. In the example, the centering tooth 231 engages in a recess with at least partly counter-shaped profile 331 provided on the mounting cross member 102. The elastic element 211 preferably performs an elastic suspension function for the plate-shaped body 200 of the cover element 10. Preferably, the centering tooth 231 is fixed to the elastic element 211 and more preferably, it forms a single piece with the latter. According to one advantageous embodiment, the centering tooth 231 comprises an abutment plate 232 which abuts in a respective seat 332 (figure 8B) defined on an edge of the mounting cross members 102 which delimits the through opening 101, that is on an inner edge. The pressure transmission member 250 here acts also as support device for the aforesaid alignment means 211, 231. The aforesaid support device can be coupled, or is coupled, reversibly or irreversibly to the plate-shaped body 200 also in this case. Preferably, the first cover element 10 also in this case comprises a centering system adapted to center the support device with respect to the plate-shaped body 200, preferably along two or three perpendicular axes. The centering system in the examples in figures 15 to 17 is a distributed centering system which, for each support device 250 (or pressure transmission member 250), comprises a pair of parallel arms 260 adapted to interfere with a pair of respective abutment walls 261 projecting from the plate-shaped body 200 in order to counter a rotation of the support device 250 with respect to the plate-shaped body 200 about an axis perpendicular to the main faces of the plate-shaped body 200, and therefore allows the support device, therefore the pressure transmission member 250 here, to be centered with respect to the plate-shaped body 200 along two perpendicular axes. Moreover, due to the provision of the alignment system 211, 231, the plate-shaped body 200, in the absence of external forces, that is in the situation in figure 18, is aligned with respect to the mounting cross members 102 also with respect to a third axis perpendicular to the aforesaid two axes so that the plate-shaped body 200 is aligned with respect to the mounting cross member 102 along three mutually perpendicular axes.

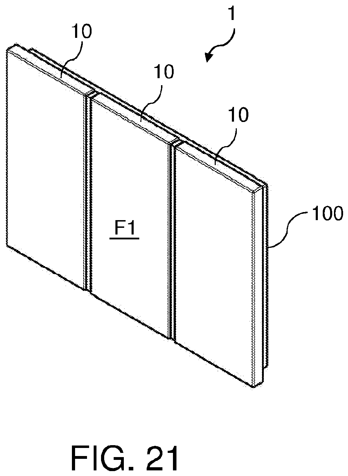

With reference to figure 21, it shows a further embodiment of a cover plate 1 in which in addition to covering the through opening 101 and the mounting cross members 102, the first cover elements 10 are also such as to cover the connection uprights 103, therefore they completely or almost completely cover a whole face of the base body 100 of the cover plate 1. In other words, second cover elements separate from the first cover elements 10 are not provided in such an embodiment.

Finally, it is worth noting that although first cover elements 10, 11, 12 essentially having covering or mechanical actuating functionalities have been described, the first cover elements 10, 11, 12 may also have on-board electronic components adapted to control the associable modular electric apparatuses 3 and/or to communicate data therewith. The first cover elements 10, 11, 12 may also comprise sensors and/or electronic display devices.

It may be comprehended from the above description how a cover plate of the type described above may achieve the preset object, thus allowing both the above-described appearance-related problems and the functional problems with reference to the cover plates of the known art, to be resolved.

Obviously, an expert in the field, with the object of meeting contingent and specific needs, can make numerous changes and variants to the above-described cover plate and to the group of parts, moreover all contained within the scope of protection of the invention, which is defined by the following claims.

## Claims

1. A cover plate (1) for wall-mounting modular electric apparatuses (3), comprising:
- a frame-shaped base body (100) which extends about a through opening (101), comprising two mounting cross members (102) arranged on opposite sides with respect to the through opening (101), two connection uprights (103) arranged on opposite sides with respect to the through opening (101) and adapted to connect the two mounting cross members (102) to each other;
- a plurality of first cover elements (10, 11, 12) arranged side-by-side one another between the connection uprights (103) to wholly or partly cover the through opening (101), each cover element (10, 11, 12) being associable with a respective modular electric apparatus (3) ;
- coupling elements (230) adapted to mechanically couple the first cover elements (10, 11, 12) to the mounting cross members (102);
- wherein the first cover elements (10, 11, 12) overlap the mounting cross members (102) to also cover the mounting cross members (102), in addition to the through opening (101), **characterized in that** the first cover elements comprise a plate-shaped body (200) and two side walls (270) which project from the plate-shaped body (200) towards the base body (100);
and **in that** the side walls (270) are at least partly received inside the through opening (101) of the base body (100).

2. A cover plate (1) according to claim 1, further comprising a plurality of second cover elements (20) comprising a cover element (20) fixed to one of said connection uprights (103) and a further cover element (20) fixed to the other of said connection uprights (103), each of the second cover elements (20) being such as to cover a respective connection upright (103).

3. A cover plate (1) according to claim 2, wherein the first cover elements (10, 11, 12) are interposed between the second cover elements (20).

4. A cover plate (1) according to any one of the preceding claims, wherein the plurality of the first cover elements (10, 11, 12) defines an array of cover elements having a flat front face (F1).

5. A cover plate (1) according to claims 2 or 3, wherein the plurality of the first cover elements (10, 11) together with the plurality of the second cover elements (20) defines an array of cover elements having a flat front face (F1).

6. A cover plate (1) according to claims 4 or 5, wherein said array has at least one pair of straight opposite side faces.

7. A cover plate (1) according to claims 4 or 5, wherein said array has two pairs of straight opposite side faces.

8. A cover plate (1) according to any one of the preceding claims, wherein the first cover elements (10, 11, 12) comprise at least a first cover element (10, 12) which extends between the mounting cross members (102) transversely to the mounting cross members (102), thus overlapping the through opening (101).

9. A cover plate (1) according to any one of the preceding claims, wherein the first cover elements (10, 11, 12) comprise a first cover element (12) having a window (13) defined in the thickness of the first cover element (12) to operatively associate the first cover element (12) with a modular electric apparatus (3) which is a socket.

10. A cover plate (1) according to any one of the preceding claims, wherein at least one of the first cover elements (10, 11, 12) is a key for actuating a modular electric apparatus (3) and comprises at least one pressure transmission member (250) operatively coupled to the plate-shaped body (200) in order to transmit a pressure force applied to the plate-shaped body (200) to the modular electric apparatus (3).

11. A cover plate (1) according to claim 10, wherein the pressure transmission member (250) comprises a stroke multiplier lever (251).

12. A cover plate (1) according to claim 11, wherein the stroke multiplier lever (251) comprises a fulcrum (252) reacting on the plate-shaped body (200) and two opposite end portions (253, 254), of which one end portion (253) reacting on one mounting cross member (102) and the other end portion (254) reacting on a movable portion (7) of the modular electric apparatus (3).

13. A cover plate (1) according to any one of the preceding claims, wherein at least one of the first cover elements (10, 11, 12) is coupled to the mounting cross members (102) so as to rotate and translate with respect to the base body (100).

14. A cover plate (1) according to claim 1, wherein the coupling elements (230) are fixed to the plate-shaped body (200) and are adapted and configured for mechanically coupling the cover element (10, 11, 12) preferably directly to the base body (100), wherein the coupling elements (230) allow the plate-shaped body (200) of the first cover element (10, 11, 12) to be constrained to the base body (100) so that the plate-shaped body (200) can move with respect to the base body (100) between two opposite stroke end positions, in one of which the plate-shaped body (200) is relatively closer to the mounting cross members (102) and in the other of which the plate-shaped body (200) is relatively further away from the mounting cross members (102) .

15. A cover plate (1) according to claim 14, wherein the first cover element comprises alignment means (211, 231) adapted to be operatively interposed between the first cover element (10, 11, 12) and the base body (100) to keep the plate-shaped body (200) in the stroke end position in which it is relatively further away from the base body (100) in the absence of external forces.

16. A cover plate (1) according to claim 15, wherein the alignment means (211, 231) comprise at least one elastic element (211) operatively interposed between the plate-shaped body (200) and the mounting cross member (102) .

17. A cover plate (1) according to claims 15 or 16, wherein the alignment means (211, 231) allow an alignment along three perpendicular axes to be obtained between the plate-shaped body (200) and the base body (100).

18. A cover plate (1) according to claim 1, wherein in addition to covering the through opening (101) and the mounting cross members (102), the first cover elements (10, 11, 12) are also such as to cover the connection uprights (103) .

19. A cover plate (1) according to claim 1, wherein the side walls (270) are cap-shaped or trapezoid-shaped.

20. A cover plate (1) according to any one of the preceding claims, wherein the mounting cross members (102) are arranged in retracted position with respect to the connection uprights (103).

21. A group of parts for wall-mounting modular electric apparatuses (3) comprising:
- a supporting frame (2) that can be fixed to a wall having a frame-shaped body which extends about a mounting window (5) ;
- a plurality of modular electric apparatuses (3) installed side-by-side one another in the mounting window (5);
**characterized in that** the group of parts comprises a cover plate (1) according to any one of the preceding claims, fixed to the supporting frame (2).

## Patentansprüche

1. Abdeckplatte (1) zur Wandmontage modularer elektrischer Vorrichtungen (3), umfassend:
- einen rahmenförmigen Grundkörper (100), der sich um eine Durchgangsöffnung (101) erstreckt und zwei Montagequerträger (102), die auf gegenüberliegenden Seiten in Bezug auf die Durchgangsöffnung (101) angeordnet sind, und zwei Verbindungsholme (103) umfasst, die auf gegenüberliegenden Seiten in Bezug auf die Durchgangsöffnung (101) angeordnet und zum Verbinden der zwei Montagequerträgern (102) miteinander ausgelegt sind;
- eine Vielzahl von ersten Abdeckelementen (10, 11, 12), die nebeneinander zwischen den Verbindungsholmen (103) angeordnet ist, um die Durchgangsöffnung (101) ganz oder teilweise abzudecken, wobei jedes Abdeckelement (10, 11, 12) mit einer entsprechenden modularen elektrischen Vorrichtung (3) verbindbar ist;
- Kopplungselemente (230), die zum mechanischen Koppeln der ersten Abdeckelemente (10, 11, 12) mit den Montagequerträgern (102) ausgelegt sind;
- wobei die ersten Abdeckelemente (10, 11, 12) die Montagequerträger (102) überlappen, um zusätzlich zu der Durchgangsöffnung (101) auch die Montagequerträger (102) abzudecken, **dadurch gekennzeichnet, dass** die ersten Abdeckelemente einen plattenförmigen Körper (200) und zwei Seitenwände (270) umfassen, die vom plattenförmigen Körper (200) zum Grundkörper (100) vorstehen; und dass die Seitenwände (270) zumindest teilweise innerhalb der Durchgangsöffnung (101) des Grundkörpers (100) aufgenommen sind.

2. Abdeckplatte (1) nach Anspruch 1, ferner umfassend eine Vielzahl von zweiten Abdeckelementen (20), die ein Abdeckelement (20), das an einem der Verbindungsholme (103) befestigt ist, und ein weiteres Abdeckelement (20) umfasst, das am anderen der Verbindungsholme (103) befestigt ist, wobei jedes der zweiten Abdeckelemente (20) derart ist, dass es einen jeweiligen Verbindungsholm (103) abdeckt.

3. Abdeckplatte (1) nach Anspruch 2, wobei die ersten Abdeckelemente (10, 11, 12) zwischen den zweiten Abdeckelementen (20) angeordnet sind.

4. Abdeckplatte (1) nach einem der vorhergehenden Ansprüche, wobei die Vielzahl von ersten Abdeckelementen (10, 11, 12) eine Anordnung von Abdeckelementen mit einer flachen Vorderfläche (F1) definiert.

5. Abdeckplatte (1) nach Anspruch 2 oder 3, wobei die Vielzahl von ersten Abdeckelementen (10, 11) zusammen mit der Vielzahl von zweiten Abdeckelementen (20) eine Anordnung von Abdeckelementen mit einer flachen Vorderseite (F1) definiert.

6. Abdeckplatte (1) nach Anspruch 4 oder 5, wobei die Anordnung mindestens ein Paar gerader gegenüberliegender Seitenflächen aufweist.

7. Abdeckplatte (1) nach Anspruch 4 oder 5, wobei die Anordnung zwei Paare gerader gegenüberliegender Seitenflächen aufweist.

8. Abdeckplatte (1) nach einem der vorhergehenden Ansprüche, wobei die ersten Abdeckelemente (10, 11, 12) mindestens ein erstes Abdeckelement (10, 12) umfassen, das sich zwischen den Montagequerträgern (102) quer zu den Montagequerträgern (102) erstreckt und somit die Durchgangsöffnung (101) überdeckt.

9. Abdeckplatte (1) nach einem der vorhergehenden Ansprüche, wobei die ersten Abdeckelemente (10, 11, 12) ein erstes Abdeckelement (12) mit einem Fenster (13) umfassen, das in der Dicke des ersten Abdeckelements (12) definiert ist, um das erste Abdeckelement (12) funktionell mit einer modularen elektrischen Vorrichtung (3) zu verbinden, die eine Steckdose ist.

10. Abdeckplatte (1) nach einem der vorhergehenden Ansprüche, wobei mindestens eines der ersten Abdeckelemente (10, 11, 12) eine Taste zum Betätigen einer modularen elektrischen Vorrichtung (3) ist und mindestens ein Druckübertragungselement (250) umfasst, das funktionell mit dem plattenförmigen Körper (200) gekoppelt ist, um eine auf den plattenförmigen Körper (200) ausgeübte Druckkraft auf die modulare elektrische Vorrichtung (3) zu übertragen.

11. Abdeckplatte (1) nach Anspruch 10, wobei das Druckübertragungselement (250) einen Hubvervielfachungshebel (251) umfasst.

12. Abdeckplatte (1) nach Anspruch 11, wobei der Hubvervielfachungshebel (251) einen Drehpunkt, der auf den plattenförmigen Körper (200) einwirkt, und zwei gegenüberliegende Endabschnitte (253, 254) (252) umfasst, von denen ein Endabschnitt (253) auf einen Montagequerträger (102) einwirkt und der andere Endabschnitt (254) auf einen beweglichen Abschnitt (7) der modularen elektrischen Vorrichtung (3) einwirkt.

13. Abdeckplatte (1) nach einem der vorhergehenden Ansprüche, wobei mindestens eines der ersten Abdeckelemente (10, 11, 12) mit den Montagequerträgern (102) gekoppelt ist, um sich in Bezug auf den Grundkörper (100) zu drehen und zu verschieben.

14. Abdeckplatte (1) nach Anspruch 1, wobei die Kopplungselemente (230) am plattenförmigen Körper (200) befestigt und so ausgelegt und ausgebildet sind, dass sie das Abdeckelement (10, 11, 12) vorzugsweise direkt mechanisch mit dem Grundkörper (100) koppeln, wobei die Kopplungselemente (230) ermöglichen, dass der plattenförmige Körper (200) des ersten Abdeckelements (10, 11, 12) am Grundkörper (100) festgehalten wird, so dass der plattenförmige Körper (200) sich in Bezug auf den Grundkörper (100) zwischen zwei gegenüberliegenden Hubendstellungen bewegen kann, wobei der plattenförmige Körper (200) in einer davon relativ näher an den Montagequerträgern (102) ist und der plattenförmige Körper (200) in der anderen davon relativ weiter entfernt von den Montagequerträgern (102) ist.

15. Abdeckplatte (1) nach Anspruch 14, wobei das erste Abdeckelement Ausrichtmittel (211, 231) umfasst, die dazu ausgelegt sind, funktionell zwischen dem ersten Abdeckelement (10, 11, 12) und dem Grundkörper (100) angeordnet zu werden, um den plattenförmigen Körper (200) in der Hubendstellung zu halten, in der er ohne äußere Kräfte relativ weiter vom Grundkörper (100) entfernt ist.

16. Abdeckplatte (1) nach Anspruch 15, wobei die Ausrichtmittel (211, 231) mindestens ein elastisches Element (211) umfassen, das funktionell zwischen dem plattenförmigen Körper (200) und dem Montagequerelement (102) angeordnet ist.

17. Abdeckplatte (1) nach Anspruch 15 oder 16, wobei die Ausrichtmittel (211, 231) ermöglichen, dass eine Ausrichtung entlang dreier senkrechter Achsen zwischen dem plattenförmigen Körper (200) und dem Grundkörper (100) erreicht wird.

18. Abdeckplatte (1) nach Anspruch 1, wobei die ersten Abdeckelemente (10, 11, 12) zusätzlich dazu, dass sie die Durchgangsöffnung (101) und die Montagequerträger (102) abdecken, auch so sind, dass sie die Verbindungsholme (103) abdecken.

19. Abdeckplatte (1) nach Anspruch 1, wobei die Seitenwände (270) kappenförmig oder trapezförmig sind.

20. Abdeckplatte (1) nach einem der vorhergehenden Ansprüche, wobei die Montagequerelemente (102) in Bezug auf die Verbindungsholme (103) in einer zurückgezogenen Position angeordnet sind.

21. Gruppe von Teilen zur Wandmontage modularer elektrischer Vorrichtungen (3), umfassend:
- einen Tragrahmen (2), der an einer Wand befestigt werden kann und einen rahmenförmigen Körper aufweist, der sich um ein Montagefenster (5) erstreckt;
- eine Vielzahl von modularen elektrischen Vorrichtungen (3), die im Montagefenster (5) nebeneinander installiert ist;
**dadurch gekennzeichnet, dass** die Gruppe von Teilen eine Abdeckplatte (1) nach einem der vorhergehenden Ansprüche umfasst, die am Tragrahmen (2) befestigt ist.

## Revendications

1. Plaque de recouvrement (1) pour appareils électriques modulaires à montage mural (3), comprenant :
- un corps de base en forme de cadre (100) qui s'étend autour d'une ouverture traversante (101), comprenant deux traverses de montage (102) agencées sur des côtés opposés par rapport à l'ouverture traversante (101), deux montants de raccordement (103) agencés sur des côtés opposés par rapport à l'ouverture traversante (101) et conçus pour relier les deux traverses de montage (102) l'une à l'autre ;
- une pluralité de premiers éléments de recouvrement (10, 11, 12) agencés côte à côte entre les montants de raccordement (103) pour recouvrir totalement ou partiellement l'ouverture traversante (101), chaque élément de recouvrement (10, 11, 12) pouvant être associé à un appareil électrique modulaire respectif (3) ;
- des éléments d'accouplement (230) conçus pour accoupler mécaniquement les premiers éléments de recouvrement (10, 11, 12) aux traverses de montage (102) ;
- dans laquelle les premiers éléments de recouvrement (10, 11, 12) chevauchent les traverses de montage (102) pour recouvrir également les traverses de montage (102), en plus de l'ouverture traversante (101), **caractérisée en ce que** les premiers éléments de recouvrement comprennent un corps en forme de plaque (200) et deux parois latérales (270) qui font saillie depuis le corps en forme de plaque (200) vers le corps de base (100) ; et **en ce que** les parois latérales (270) sont au moins partiellement reçues à l'intérieur de l'ouverture traversante (101) du corps de base (100).

2. Plaque de recouvrement (1) selon la revendication 1, comprenant en outre une pluralité de seconds éléments de recouvrement (20) comprenant un élément de recouvrement (20) fixé à l'un desdits montants de raccordement (103) et un autre élément de recouvrement (20) fixé à l'autre desdits montants de raccordement (103), chacun des seconds éléments de recouvrement (20) étant tel qu'il recouvre un montant de raccordement (103) respectif.

3. Plaque de recouvrement (1) selon la revendication 2, dans laquelle les premiers éléments de recouvrement (10, 11, 12) sont interposés entre les seconds éléments de recouvrement (20).

4. Plaque de recouvrement (1) selon l'une quelconque des revendications précédentes, dans laquelle la pluralité des premiers éléments de recouvrement (10, 11, 12) définit un réseau d'éléments de recouvrement ayant une face avant plate (F1).

5. Plaque de recouvrement (1) selon les revendications 2 ou 3, dans laquelle la pluralité des premiers éléments de recouvrement (10, 11) conjointement avec la pluralité des seconds éléments de recouvrement (20) définissent un réseau d'éléments de recouvrement ayant une face avant plate (F1).

6. Plaque de recouvrement (1) selon les revendications 4 ou 5, dans laquelle ledit réseau a au moins une paire de faces latérales opposées droites.

7. Plaque de recouvrement (1) selon les revendications 4 ou 5, dans laquelle ledit réseau a deux paires de faces latérales opposées droites.

8. Plaque de recouvrement (1) selon l'une quelconque des revendications précédentes, dans laquelle les premiers éléments de recouvrement (10, 11, 12) comprennent au moins un premier élément de recouvrement (10, 12) qui s'étend entre les traverses de montage (102) transversalement aux traverses de montage (102), chevauchant ainsi l'ouverture traversante (101).

9. Plaque de recouvrement (1) selon l'une quelconque des revendications précédentes, dans laquelle les premiers éléments de recouvrement (10, 11, 12) comprennent un premier élément de recouvrement (12) ayant une fenêtre (13) définie dans l'épaisseur du premier élément de recouvrement (12) pour associer fonctionnellement le premier élément de recouvrement (12) à un appareil électrique modulaire (3) qui est une prise.

10. Plaque de recouvrement (1) selon l'une quelconque des revendications précédentes, dans laquelle au moins l'un des premiers éléments de recouvrement (10, 11, 12) est une touche pour actionner un appareil électrique modulaire (3) et comprend au moins un élément de transmission de pression (250) fonctionnellement accouplé au corps en forme de plaque (200) afin de transmettre une force de pression appliquée au corps en forme de plaque (200) à l'appareil électrique modulaire (3).

11. Plaque de recouvrement (1) selon la revendication 10, dans laquelle l'élément de transmission de pression (250) comprend un levier multiplicateur de course (251).

12. Plaque de recouvrement (1) selon la revendication 11, dans laquelle le levier multiplicateur de course (251) comprend un point d'appui (252) réagissant sur le corps en forme de plaque (200) et deux parties d'extrémité opposées (253, 254), dont une partie d'extrémité (253) réagissant sur une traverse de montage (102) et l'autre partie d'extrémité (254) réagissant sur une partie mobile (7) de l'appareil électrique modulaire (3).

13. Plaque de recouvrement (1) selon l'une quelconque des revendications précédentes, dans laquelle au moins l'un des premiers éléments de recouvrement (10, 11, 12) est accouplé aux traverses de montage (102) de manière à tourner et à se déplacer en translation par rapport au corps de base (100).

14. Plaque de recouvrement (1) selon la revendication 1, dans laquelle les éléments d'accouplement (230) sont fixés au corps en forme de plaque (200) et sont conçus et configurés de manière à accoupler mécaniquement l'élément de recouvrement (10, 11, 12) de préférence directement au corps de base (100), dans laquelle les éléments d'accouplement (230) permettent au corps en forme de plaque (200) du premier élément de recouvrement (10, 11, 12) d'être contraint au corps de base (100) de sorte que le corps en forme de plaque (200) puisse se déplacer par rapport au corps de base (100) entre deux positions de fin de course opposées, dans l'une desquelles le corps en forme de plaque (200) est relativement plus proche des traverses de montage (102) et dans l'autre desquelles le corps en forme de plaque (200) est relativement plus éloigné des traverses de montage (102).

15. Plaque de recouvrement (1) selon la revendication 14, dans laquelle le premier élément de recouvrement comprend des moyens d'alignement (211, 231) conçus pour être fonctionnellement interposés entre le premier élément de recouvrement (10, 11, 12) et le corps de base (100) pour maintenir le corps en forme de plaque (200) dans la position de fin de course dans laquelle il est relativement plus éloigné du corps de base (100) en l'absence de forces extérieures.

16. Plaque de recouvrement (1) selon la revendication 15, dans laquelle les moyens d'alignement (211, 231) comprennent au moins un élément élastique (211) interposé fonctionnellement entre le corps en forme de plaque (200) et la traverse de montage (102).

17. Plaque de recouvrement (1) selon les revendications 15 ou 16, dans laquelle les moyens d'alignement (211, 231) permettent d'obtenir un alignement selon trois axes perpendiculaires entre le corps en forme de plaque (200) et le corps de base (100).

18. Plaque de recouvrement (1) selon la revendication 1, dans laquelle en plus de recouvrir l'ouverture traversante (101) et les traverses de montage (102), les premiers éléments de recouvrement (10, 11, 12) sont également tels qu'ils recouvrent les montants de raccordement (103).

19. Plaque de recouvrement (1) selon la revendication 1, dans laquelle les parois latérales (270) sont en forme de capuchon ou en forme de trapèze.

20. Plaque de recouvrement (1) selon l'une quelconque des revendications précédentes, dans laquelle les traverses de montage (102) sont agencées en position escamotée par rapport aux montants de raccordement (103).

21. Groupe de pièces pour appareils électriques modulaires à montage mural (3) comprenant :
- un cadre de support (2) qui peut être fixé à un mur ayant un corps en forme de cadre qui s'étend autour d'une fenêtre de montage (5) ;
- une pluralité d'appareils électriques modulaires (3) installés côte à côte dans la fenêtre de montage (5) ;
**caractérisé en ce que** le groupe de pièces comprend une plaque de recouvrement (1) selon l'une quelconque des revendications précédentes, fixée au cadre de support (2).
